Europäisches Patentamt

European Patent Office

Office européen des brevets

(19)

(11) Veröffentlichungsnummer: **0 262 436 B1**

(12) **EUROPÄISCHE PATENTSCHRIFT**

(45) Veröffentlichungstag der Patentschrift: **27.12.91**

(51) Int. Cl.⁵: **G01F 1/32**

(21) Anmeldenummer: **87112821.1**

(22) Anmeldetag: **02.09.87**

(54) **Strömungsmengenmesser nach dem Wirbel-Durchflussmesser-Prinzip, insbesondere Luftmengenmesser für elektrische Einspritzsteuerungen bei KFZ-Motoren.**

(30) Priorität: **30.09.86 DE 3633222**

(43) Veröffentlichungstag der Anmeldung:
**06.04.88 Patentblatt 88/14**

(45) Bekanntmachung des Hinweises auf die
Patenterteilung:
**27.12.91 Patentblatt 91/52**

(84) Benannte Vertragsstaaten:
**DE ES FR GB IT SE**

(56) Entgegenhaltungen:
**DD-A- 141 352**
**DE-A- 3 032 578**
**DE-A- 3 239 126**
**US-A- 4 380 934**

(73) Patentinhaber: **SIEMENS AKTIENGESELL-SCHAFT**
**Wittelsbacherplatz 2**
**W-8000 München 2(DE)**

(72) Erfinder: **Magori, Valentin, Dipl.-Phys.**
**Limburgstrasse 17**
**W-8000 München 90(DE)**

EP 0 262 436 B1

## Beschreibung

Diese vorliegende Erfindung betrifft einen Strömungsmengenmesser gemäß Oberbegriff des Anspruchs 1.

Für elektronische Einspritzsteuerungen bei KFZ-Motoren ist es wichtig, die Menge der angesaugten Luft zu messen. Aus diesem Grunde besteht ein Interesse an einem für den Einsatz im KFZ geeigneten, kostengünstig zu verwirklichenden Luftdurchflußmesser.

Ein bereits bekannter Wirbelfrequenz-Durchflußmesser ("Vortex-Meter"), bei dem die Wirbel hinter einem in einem Meßrohr montierten Störkörper ausgezählt werden, bietet gute Voraussetzungen zur Messung einer Strömungsmenge, vergl. Bonfig, K. W.: "Technische Durchflußmessung", Vulkan-Verlag, Essen, 1977. Bei einer derartigen Einrichtung gilt, daß das pro Zeiteinheit transportierte Volumen V in einem weiten Geschwindigkeitsbereich zur Wirbelfrequenz $f_w$ proportional ist:

$$\dot{V} \sim f_w \qquad (1)$$

Dabei ist problematisch, daß die für die Einspritzsteuerung wesentliche Massendurchflußgeschwindigkeit

$$\dot{M} = \dot{V} \phi_L \qquad (2)$$

erst durch Multiplikation der Volumendurchflußgeschwindigkeit mit der Dichte der Luft $\phi_L$ errechnet werden muß und daß keine geeigneten Aufnehmer für die Luftdichte oder (bei bekannter Temperatur gleichwertig) den Luftdruck vorhanden sind. Insbesondere Piezo-Aufnehmer sind wegen ihrer Unfähigkeit, die Gleichkomponente des Drucks zu messen, ungeeignet.

Aus der DE 3032578 A1 ist bereits ein Strömungsmesser nach dem Wirbel-Durchflußmesser-Prinzip bekannt mit einem zum Erzeugen von Wirbeln in dem Strömungsmedium innerhalb eines Meßrohrs angeordneten Störkörper mit Druckaufnehmern, wobei zum Zwecke des Registrierens der hinter dem Störkörper auftretenden Wirbel, entweder mit den Druckaufnehmern am Störkörper selbst die Frequenz der alternierenden Druckdifferenzen oder Kräftedifferenzen, die aufgrund der von durch den Störkörper in dem Strömungsmedium erzeugten Wirbel auftreten, gemessen wird oder eine Ultraschallmeßstrecke vorhanden ist. Aus der Frequenz $f_w$ der Differenzauftriebskraft $F_A(t)$ wird die Strömungsgeschwindigkeit v und mit Hilfe der Amplitude der Differenzauftriebskraft schließlich der Massenstrom durch die Gleichungen

$$(*) \quad \dot{m} = 2 \left( \tfrac{1}{2} \phi \, v^2 \right) \cdot \tfrac{1}{v} \cdot \text{Rohrquerschnittsfläche}$$
$$(**) \quad F_A(t) = C_A(t) \left( \tfrac{1}{2} \phi \, v^2 \right) \cdot \text{Auftriebsfläche}$$

gewonnen.

Der vorliegenden Erfindung liegt die Aufgabe zugrunde, einen insbesondere für den Einsatz im KFZ geeigneten, kostengünstig zu verwirklichenden und zuverlässig arbeitenden Durchflußmesser zu schaffen, der auch bei niedrigen Strömungsgeschwindigkeiten einsetzbar ist und der gestattet, die Strömungsrichtung zu erkennen und die Geschwindigkeit von Strömungen in Gegenrichtung zu messen.

Die der vorliegenden Erfindung zugrundeliegende Aufgabe wird durch einen Strömungsmengenmesser der eingangs genannten Art und gemäß dem Oberbegriff des Patentanspruchs 1 gelöst, der durch die in dem kennzeichenden Teil des Patentanspruchs 1 angegebenen Merkmale charakterisiert ist.

Vorteilhafte Weiterbildungen der Erfindung sind durch die in den Unteransprüchen angegebenen Merkmale gekennzeichnet.

Im folgenden wird die vorliegende Erfindung anhand mehrerer, Ausführungsbeispiele für die Erfindung betreffender Figuren im einzelnen beschrieben.

Fig. 1      zeigt eine schematische Darstellung eines erfindungsgemäßen Wirbelstraßen-Durchflußmessers.

Fig. 2      zeigt eine Diagrammdarstellung betreffend die Abhängigkeit der Signalamplitude eines Bestimmungssignals von der Strömungsgeschwindigkeit bei Abtastung mit Ultraschall und Messung des Differenzdrucks an einem Störkörper.

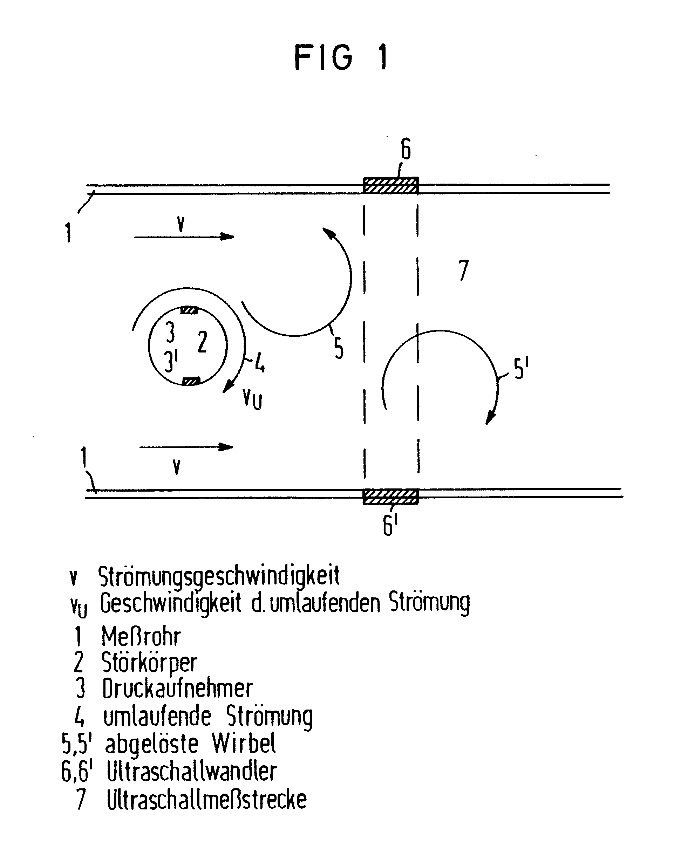

Gemäß der vorliegenden Erfindung wird das eingangs erläuterte Problem dadurch gelöst, daß zusätzlich zur Wirbelzählung an dem Störkörper von den Wirbeln induzierte, im Vorzeichen alternierende Druckdifferenzen (oder Kräftedifferenzen) gemessen und zur Bestimmung der Dichte herangezogen werden. Aus dem Stand der Technik ist bekannt, daß solche Druck- bzw. Differenzdruckänderungen durch Piezo-Biegewandler auf einfache Weise aufgenommen werden können. Bei der Entstehung der Wirbel wird nämlich der Störkörper von einem Wirbelströmungsanteil umströmt (Fig. 1), der seinen Drehsinn mit der Wirbelfrequenz periodisch ändert und dessen Geschwindigkeit $v_u$ zur Durchflußgeschwindigkeit v proportional ist:

$$v_u \curvearrowleft v = \frac{\dot{V}}{F} \qquad (3),$$

wobei F die Querschnittsfläche des Meßrohrs ist.

Die Gesamtgeschwindigkeit $v_1$, $v_2$, mit der beide der Seiten des Störkörpers angeströmt werden, ergibt sich als die Summe von Strömungsgeschwindigkeit und der Geschwindigkeit der umlaufenden Strömung

$$v_{1,2} \approx v \pm v_u \qquad (4).$$

Dementsprechend sind die auf den beiden Seiten des Störkörpers wirkenden Drücke $p_1$, $p_2$

$$p_{1,2} = p_0 + \phi_L \cdot (v_{1,2})^2 \approx p_0 + \phi_L \cdot (v \pm v_u)^2 \qquad (5),$$

wobei $p_0$ der statische Druck im Meßrohr ist. Daraus ergibt sich als Druckdifferenz $\Delta p$ zwischen beiden Seiten

$$\Delta p \approx 4 . v v_u \cdot \phi_L \sim \phi_L \cdot v^2 \qquad (6),$$

vgl. den äquivalenten Ausdruck (**), der weiter oben angegeben ist.

Somit folgt für die Massendurchflußgeschwindigkeit

$$\dot{M} = \dot{V} \cdot \mathscr{S}_L \sim f_w \frac{\Delta p}{f_w{}^2} = \frac{\Delta p}{f_w} \qquad (7).$$

Die Frequenz der Wirbel ist dabei wie bei einem bereits vorgeschlagenen "Milchzähler" durch Messung der Frequenz der periodischen Differenzdruckwechsel zu bestimmen.

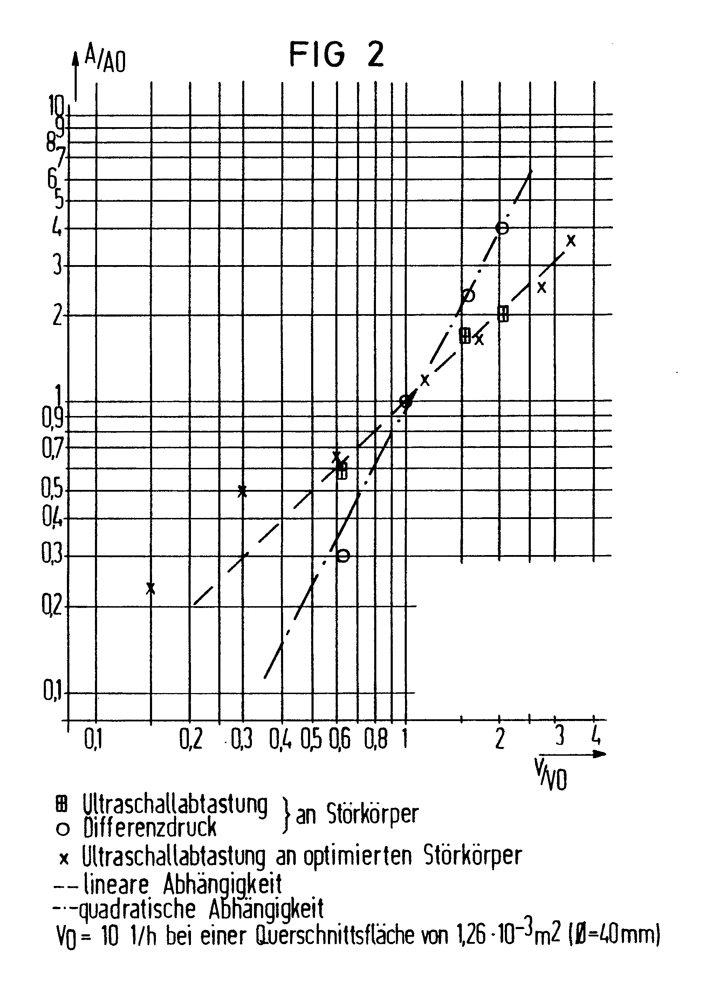

Da die Druckdifferenzen quadratisch mit der Strömungsgeschwindigkeit abnehmen, ist es vorteilhaft, die Frequenzbestimmung durch Wirbelabtastung mit Ultraschall vorzunehmen, da hierbei die Amplitude des Meßsignals linear mit der Strömungsgeschwindigkeit abnimmt. Dabei könnte im untersten Meßbereich, wenn die Differenzdruckmessung wegen der quadratischen Amplitudenabnahme kein ausreichendes Signal mehr liefert, unter Verzicht auf die Vorteile des erfindungsgemäßen Verfahrens wenigstens noch die Durchflußgeschwindigkeit V gemessen werden. Die quadratische bzw. lineare Abhängigkeit der Signalamplitude von der Strömungsgeschwindigkeit bei Druckdifferenz- bzw. Ultraschallabtastung der Wirbel zeigt Fig. 2. Zum Vergleich sind in Fig. 2 die Amplitudenwerte eingetragen, die mit Ultraschallabtastung der Wirbel bei einem für Luft optimierten Störkörper nach an anderer Stelle gemachten Vorschlag gewonnen wurde.

Bei gleichzeitiger Wirbelabtastung nach den beiden Verfahren kann so aus den mit Ultraschall gewonnenen Meßwerten zur Steigerung der Empfindlichkeit oder Meßgenauigkeit Vorgaben für die Druckdifferenzauswertung abgeleitet werden, z. B. für die Auswertebandbreite oder die Verstärkung. Insbesondere ermöglicht die Kohärenz zwischen den mit Ultraschall- und Druckdifferenzauswertung gewonnenen Signalen den Einsatz von kohärenten Signalauswertetechniken, die auch sehr schwache Signale auszuwerten gestatten (z. B. synchrone Gleichrichtung).

Selbstverständlich sind die Signale nur dann kohärent, wenn die Ultraschallstrecke bezüglich des Störkörpers stromab liegt. Daraus ergibt sich die Möglichkeit, die Strömungsrichtung zu erkennen und sogar die Geschwindigkeit von Strömungen in Gegenrichtung durch Druckdifferenzauswertung allein zu messen.

**Patentansprüche**

1. Durchflußmesser nach dem Wirbel-Durchflußmesser-Prinzip, insbesondere für Luft in elektrischen Einspritzsteuerungen bei KFZ-Motoren, mit
   - einem zum Erzeugen von Wirbeln in dem Strömungsmedium innerhalb eines Meßrohrs (1)

EP 0 262 436 B1

angeordneten Störkörper (2),
- Druckaufnehmern am Störkörper, die den im Vorzeichen periodisch alternierenden Differenzdruck, der aufgrund von durch den Störkörper (2) in dem Strömungsmedium erzeugten Wirbel auftritt, aufnehmen können,
- einer Einrichtung zum Bestimmen der Frequenz $f_w$ der Wirbel durch Messen der Frequenz der periodischen Differenzdruckwechsel und mit
- einer Einrichtung zum Messen des Differenzdrucks $\Delta p$, wobei weiterhin vorgesehen ist, daraus gemäß der Formel

$$\dot{M} = \frac{\Delta p}{f_w}$$

die Massendurchflußgeschwindigkeit $\dot{M}$ zu bestimmen,
dadurch **gekennzeichnet, daß**
- eine Einrichtung zum Zählen der Wirbel durch Zählen der Differenzdruckwechsel vorhanden ist,
- eine zusätzliche Einrichtung zum Messen der Frequenz $f_w$ der Wirbel durch Wirbelabtastung mittels Ultraschall vorhanden ist, wobei diese Meßeinrichtung stromabwärts von dem Störkörper (2) angeordnet ist und zwei Ultraschallwandler (6, 6') enthält, die zwischen sich eine durch das Strömungsmedium quer zu dessen Strömungsrichtung verlaufende Meßstrecke (7) zum Abtasten abgelöster Wirbel (5 5') bilden,
- vorgesehen ist, daß eine gleichzeitige Wirbelabtastung nach dem Ultraschall- und dem Differenzdruckverfahren erfolgt und aus den mit Ultraschall gewonnenen Meßwerten unter Ausnutzung der Kohärenz zwischen den mit beiden Verfahren gewonnenen Signalen, z.B. durch synchrone Gleichrichtung, Vorgaben für die Druckdifferenzauswertung gewonnen werden und
- die Erkennung der Strömungsrichtung ermöglicht ist und vorgesehen ist, die Frequenz der Wirbel in Gegenrichtung durch Druckdifferenzauswertung allein zu messen.

2. Strömungsmengenmesser nach Anspruch 1, **dadurch gekennzeichnet,** daß die Ultraschallwandler (6, 6') Piezo-Biegewandler sind.

3. Strömungsmengenmesser nach Anspruch 1 oder 2, **dadurch gekennzeichnet,** daß die sich diametral gegenüberstehenden Ultraschallwandler (6, 6') in die Wandung des Meßrohrs (1) eingesetzt sind.

**Claims**

1. Flowmeter based on the vortex flowmeter principle, in particular for air in electrical injection controls in motor vehicle engines, having
   - a spoiler (2) arranged within a measuring tube (1) for generating vortices in the flow medium,
   - pressure pick-ups on the spoiler, which can pick up the differential pressure, alternating periodically in operational sign, which occurs due to vortices generated by the spoiler (2) in the flow medium,
   - a device for determining the frequency $f_w$ of the vortices by measuring the frequency of the periodic changes in differential pressure, and having
   - a device for measuring the differential pressure $\Delta p$, it also being provided that the mass flow rate $\dot{M}$ is to be determined from this according to the formula

$$\dot{M} = \frac{\Delta p}{f_w} \ ,$$

characterised in that
   - there is a device for counting the vortices by counting the changes in differential pressure,
   - there is an additional device for measuring the frequency $f_w$ of the vortices by vortex scanning by means of ultrasound, this measuring device being arranged downstream of the spoiler (2) and

4

containing two ultrasonic transducers (6, 6'), which form between them a measuring section (7), running through the flow medium transversely to its direction of flow, for scanning shed vortices (5, 5'),
- it is provided that a simultaneous vortex scanning is performed by the ultrasonic method and the differential pressure method and set values are obtained for the pressure difference evaluation from the measured values obtained with ultrasound, by utilising the coherence between the signals obtained with the two methods, for example by synchronous rectification, and
- the recognition of the flow direction is enabled and is intended to measure the frequency of the vortices in the opposite direction by pressure difference evaluation alone.

2. Flowmeter according to Claim 1, characterised in that the ultrasonic transducers (6, 6') are flexural piezo transducers.

3. Flowmeter according to Claim 1 or 2, characterised in that the diametrically opposite ultrasonic transducers (6, 6') are fitted in the wall of the measuring tube (1).

**Revendications**

1. Débitmètre fonctionnant selon le principe du débitmètre à tourbillonnement, notamment pour l'air introduit dans des systèmes électriques de commande d'injection de moteurs de véhicules automobiles, comprenant
   - un corps perturbateur (2) servant à produire des tourbillons dans le milieu en écoulement à l'intérieur d'un tube de mesure (1),
   - des capteurs de pression montés sur le corps perturbateur et qui peuvent détecter la pression différentielle, dont le signe varie périodiquement et qui apparaît sous l'effet de tourbillons produits par le corps perturbateur (2) placé dans le milieu en écoulement,
   - un dispositif pour déterminer la fréquence $f_w$ des tourbillons par la mesure de la fréquence de la variation périodique de la pression différentielle, et
   - un dispositif pour mesurer la pression différentielle $\Delta p$, à partir de laquelle il est en outre prévu de déterminer le débit massique M conformément à la formule

$$M = \frac{\Delta p}{f_w}$$

caractérisé par le fait
   - qu'il est prévu un dispositif pour compter les tourbillons au moyen du comptage des inversions de la pression différentielle,
   - qu'il est prévu un dispositif supplémentaire pour mesurer la fréquence $f_w$ des tourbillons par exploration des tourbillons à l'aide des ultrasons, ce dispositif de mesure étant disposé en aval du corps perturbateur (2) et contenant deux convertisseurs à ultrasons (6,6'), qui forment entre eux une section de mesure (7) qui s'étend dans le milieu de mesure transversalement par rapport à cette direction d'écoulement et sert à explorer des tourbillons détachés (5,5'),
   - qu'il est prévu d'exécuter une exploration simultanée des tourbillons au moyen du procédé basé sur les ultrasons et du procédé basé sur la pression différentielle et d'obtenir, à partir des valeurs de mesure obtenues avec les ultrasons et moyennant l'utilisation de la cohérence entre les signaux obtenus au moyen des deux procédés, par exemple au moyen d'un redressement synchrone, des prescriptions pour l'évaluation de la différence de pression, et
   - que l'identification de la direction d'écoulement est rendue possible, alors qu'il est prévu de mesurer la fréquence des tourbillons en sens inverse au moyen de la seule évaluation de la différence de pression.

2. Débitmètre suivant la revendication 1, caractérisé par le fait que les transducteurs à ultrasons (6,6') sont des transducteurs piézoélectriques à flexion.

3. Débitmètre suivant la revendication 1 ou 2, caractérisé par le fait que les transducteurs à ultrasons (6,6'), qui sont diamétralement opposés, sont insérés dans la paroi du tube de mesure (1).

# FIG 1

v   Strömungsgeschwindigkeit

$v_U$  Geschwindigkeit d. umlaufenden Strömung

1   Meßrohr

2   Störkörper

3   Druckaufnehmer

4   umlaufende Strömung

5,5'  abgelöste Wirbel

6,6'  Ultraschallwandler

7   Ultraschallmeßstrecke

FIG 2

⊞ Ultraschallabtastung } an Störkörper
○ Differenzdruck

× Ultraschallabtastung an optimierten Störkörper

—— lineare Abhängigkeit

—·—quadratische Abhängigkeit

$V_0 = 10$ 1/h bei einer Querschnittsfläche von $1,26 \cdot 10^{-3}$m2 (∅=40mm)